# EUROPEAN PATENT APPLICATION

(11) **EP 1 435 754 A1**
(43) Date of publication of application: **07.07.2004**
(21) Application number: 03027802.2
(22) Date of filing: 03.12.2003
(51) Int. Cl.: H04Q 11/04, H04L 12/46

(54) **Converter/bridge and method of operation between Ethernet and ATM interfaces**

(30) Priority: 31.12.2002 US 334604
(71) Applicant: Ezlinx Technology Incorporation, Yung-Ho-City, Taipei (TW)
(72) Inventor: Jeng, Jack Ing, Arcadia, CA 91006 (US)
(74) Representative: Appelt, Christian W.

(57) **Abstract**

The present invention relates to a converter/bridge between Ethernet bus and UTOPIA bus in single or multiple channels. The converter/bridge includes a first conversion device and a second conversion device for converting Ethernet packet into ATM cells and for converting ATM cells into Ethernet packet. The first conversion device includes a first conversion unit, a combining unit and a first transmitting unit. And the second conversion device includes a receiving unit, a second conversion unit and a second transmitting unit. The present invention provides a low cost and efficient transport between the Ethernet and ATM networks.

## Description

### Field of the Invention

This invention relates to the field of Ethernet switching/transmission domain to ATM Cell switching/transmission world and in particular, a converter/bridge circuit between Ethernet Frame/Bus and UTOPIA Cell/bus in single or multiple channels.

### Background of the Invention

Ethernet is the most widely used Local Area Network (LAN) technology. Ethernet provides a low-cost, high-speed, general-purpose interface for users sharing information. And Switching offers a way of using the Ethernet standard that greatly increases its performance without requiring changes to network adapters or computer software.

An Ethernet switch is a device with multiple Ethernet connections, or ports. The Ethernet switch needs higher speed ports for file server or backbone connections via Fast Ethernet, or ATM. The Ethernet switch can be scalable up to 10-giga-bit, Giga-bit ,100-Mega bit switching system by cascading or hierachy tree structure or daisy-chained topology. The term "switch" is usually reserved for a device that has many Ethernet ports, all or most of which can accept or transmit packets simultaneously at the full rate of the connected LAN media.

An Ethernet switch interconnects a large number of ports moving packets of data between ports entirely by electronic logic. Microprocessors and software do not participate in basic data movement. Ethernet switching procedures can be encapsulated entirely within Application-Specific Integrated Circuits (ASICs). Bridges and routers, in contrast, typically use high performance RISC microprocessors to move data packets. Packet movement by microprocessor is either more expensive or slower, and requires larger devices, larger cabinets for a given number of Ethernet segments, and more electric power.

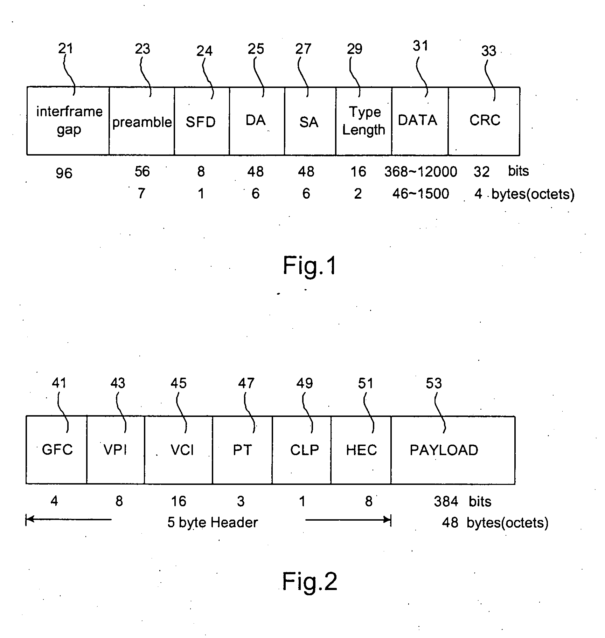

Fig. 1 shows the Ethernet packet structure. In order to maintain correct operations of the Carrier Sensitive Multi-Access/Collision Detection (CSMA/CD), the Ethernet packets are spaced out between each other for at least 96 bits 21. The packet starts with a 56-bit synchronization preamble string 23, and then followed by 8-bits of start frame delimiter 24, 48-bits of destination address 25, 48-bit of source address 27, and then a 16-bit type/length field 29. The rest of the packet is the payload data 31, and then the CRC error-checking code 33. The main advantage of the Ethernet is its simplicity and flexibility. The variable packet sizes make it easy to adjust the transmission flow, in response to the rapid change of network workload conditions. The full-distributed nature of the Ethernet makes it possible to build an unmanaged LAN at very low costs.

The Asynchronous Transfer Mode (ATM) protocol is a connection-oriented protocol that is ideal for voice, video and data communications. ATM is a network technology based on transferring data in cells or packets of a fixed size. The cell used with ATM is relatively small compared to units used with older technologies.

ATM creates a fixed channel, or route, between two points whenever data transfer begins. This differs from TCP/IP, in which messages are divided into packets and each packet can take a different route from source to destination. This difference makes it easier to track and bill data usage across an ATM network, but it makes it less adaptable to sudden surges in network traffic.

ATM Cells from multiple sources and multiple destinations are asynchronously multiplexed between multiple packet switches. Every circuit on each link of the network is identified by unique integer fields called the Virtual Path Identifier (VPI) and Virtual Circuit Identifier (VCI). ATM switches are responsible for switching cells between ports, buffering cells, translating VPI/VCI's, guaranteeing QOS, connection set-up, and connection tear-down.

Fig. 2 shows the structure of an ATM cell. Each cell is 53 bytes long, with 5 bytes reserved for the packet header and 48 bytes reserved for the payload 53. The header begins with 4 bits of generic flow control (GFC) 41 information. This field is used to ensure fair and efficient access between multiple devices sharing a single User-Network Interface (UNI). Following the GFC 41 field is an 8-bit virtual path identifier (VPI) 43, and a 16-bit virtual channel identifier (VCI) 45. The VPI 43 allows a group of virtual connections, called a virtual path, to be identified and the VCI 45 identifies the individual virtual connections within each virtual path.

Following the VPI/VCI information is the 3-bit payload type (PT) 47 field. The first bit indicates user or control data. If the first bit indicates user data, the middle bit indicates congestion, and the last bit indicates the end of frame. The next field is the 1-bit cell loss priority (CLP) 49 bit permits two priorities of cells to be defined where the network may discard low priority cells under congestion conditions. The header error check (HEC) 51 field provides an 8-bit redundancy check on the contents of the cell header.

The UTOPIA (Universal Test and Operations PHY Interface for ATM) interface is defined. by the ATM Forum to provide a standard chip-level interface between ATM devices and ATM PHY or SAR (segmentation and Re-assembly) device. The UTOPIA interface has an 8-bit data bus and includes FIFOs that are able to store ATM cells in transmitting and receiving direction. It supports cell level handshaking and optionally parity bit generation and checking. The UTOPIA interface implements a full duplex bus with separate data and control signals in both directions.

ATM Cell switching is very popular in the Digital Subscriber Line (xDSL) system (last mile, up to 9km). xDSL technology is a means by which plain old telephone service (POTS) can be used to send ATM cells over a pair of copper wires to the central station of a phone company. ATM over xDSL offers high-speed network access from the home and small office environment. Several standards are being developed in these areas, including asymmetric digital subscriber line (ADSL), universal ADSL (UADSL), G.SHDSL (Symmetric High-speed DSL) and VDSL (Very high speed DSL). These technologies use the local loop, the copper wires that connect the local central office in a user's neighborhood to the customer's phone jack. In many areas, this local loop connects directly to an ATM core network run by a telephone company. ATM over xDSL service preserves the high-speed characteristics and QoS guarantees available in the core ATM network without changing protocols. This creates the potential for an end-to-end ATM network to the residence or small office.

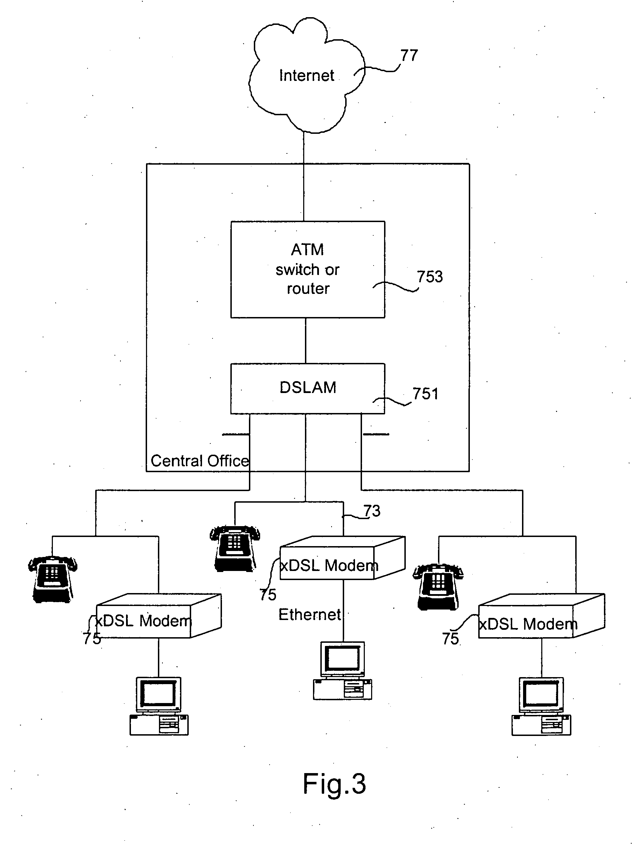

Fig. 3 shows an xDSL services delivery architecture. In xDSL, Digital Subscriber Line Access Multiplexer (DSLAM) 751 is used to deliver broadband Internet access. The function of DSLAM 751 is to aggregate digital data traffic from xDSL line 73 which is connected to the xDSL modem 75 before it is transferred to an ATM switch or Internet Protocol (IP) router 753. A typical DSLAM supports a couple of hundred xDSL channels per shelf (a single rack mount chassis). On the network side there are one or more trunk lines that carry the multiplexed traffic from the DSLAM to a switch or router 753, which is in turn connected to the Internet 77. Therefore in the DSLAM 751 side, it needs an even more powerful CPU to handle large amount of channels.

For xDSL system, it has to pack and unpack the ATM cells to and from the IP/Ethernet packet. This implies that it needs an expensive RISC CPU and huge memory to process these cells. CPU of the central office side has to handle the complicated ATM protocol of large amount of channels. Furthermore, the rapid increase in computing power, computing resources and the requirement to interconnect these computing environments led to a requirement for faster networks. These requirements led to the development and standardization of a 100Mb/s Ethernet and even a Gigabit Ethernet. Gigabit Ethernet provides all the familiarity of Ethernet, at 1,000,000,000 bits per second.

Therefore, there exists a demand for simple and fast converter/bridge between the Ethernet Packets and ATM UTOPIA interface, in single channel for the Customer Premises Equipment (CPE) and multiple channels for the DSLAM side. Specially for the DSLAM side, an AS IC based device that can convert multiple Ethernet Channels to the corresponding xDSL channels is very much demanded for a large scale Ethernet switching system over xDSL network.

### Summary of the Invention

One aspect of the present invention is to provide an Ethernet interface over xDSL, UTOPIA, ATM cell converter/bridge and method of operation Another aspect of the present invention is to provide a converter/bridge between Ethernet bus and UTOPIA bus in single or multiple channels. A further aspect of the present invention is to provide a single-chip solution, which is aimed at providing a low cost transport between the Ethernet and ATM networks.

The present invention relates to a converter/bridge between Ethernet bus interface and UTOPIA bus interface via a first bus and a second bus. The converter/bridge includes a first conversion device and a second conversion device. The first conversion device is used for receiving and converting an Ethernet data packet over the first bus into 53-byte ATM cells over the second bus. The second conversion device is used for receiving and converting 53-byte ATM cells over the second bus into Ethernet data packet over the first bus.

The first conversion device further includes a first conversion unit for converting Ethernet data packet into sub-cell data field, an ATM Cell Buffer unit for combining a group of sub-cell data field and inserting the Cell Signal byte in the header field of the ATM cell into a 53-byte ATM cell, and a transmitting unit for transmitting the 53-byte ATM cell in ATM cell format. The second conversion device further includes a receiving unit for detecting the Cell Signal Byte in the first byte of the ATM Cell Header field, a conversion unit for converting Signal Bit to the RXDV signal of Ethernet MII bus and converting associated data nibbles to the RXDA of the Ethernet MII bus, and a transmitting unit for transmitting the Ethernet data packet in Ethernet packet format.

The present invention also relates to a method of converting Ethernet data packets into ATM cells and converting ATM cells into Ethernet data packet. The method includes the following steps. First, receiving and converting an Ethernet data packet over a first bus into 53-byte ATM cells over a second bus. Then, receiving and converting 53-byte ATM cells over the second bus into Ethernet data packet over the first bus.

The present invention also relates to a method of controlling the data flow from the MAC transmit buffer by using on-and-off scheme to the TX_CLK to slow down the Ethernet transmit speed due to slower speed of the xDSL/ATM/UTOPIA transmission than the Ethernet MII bus speed.

The present invention also relates to a method of controlling the data flow to the MAC receiving buffer by using on-and-off scheme to the RX_CLK to slow down the Ethernet transmit speed due to slower speed of the xDSL/ATM/UTOPIA transmission than the Ethernet MII bus speed.

### Brief Description of the Drawings

Fig. 1 shows the structure of Ethernet packet

Fig. 2 shows the structure of ATM cell.

Fig. 3 shows xDSL services delivery architecture

Fig. 4 shows an embodiment of the present invention.

Fig. 5 shows Ethernet MAC_PHY bus interface standard and signals.

Fig 6 shows an overview of Ethernet Frames converting to UTOPIA(ATM) Cellls.

Fig 7 shows an overview of UTOPIA(ATM) Cellls converting to Ethernet Frames.

Fig. 8 (a), 8(b) show of flow controlled TX_CLK scheme of transmission path and RX_CLK scheme of reception path.

Fig. 9 (a), 9(b) show another example of flow controlled TX_CLK scheme of transmission path and RX_CLK scheme of reception path.

Fig. 10 shows an embodiment of the present invention of UTOPIA to MII interface of multiple channels.

Fig. 11 shows an embodiment of the present invention which couples to Ethernet bus interface and UTOPIA bus interface in single channel.

Fig. 12 shows an embodiment of the present invention which couples to Ethernet bus interface and UTOPIA bus interface in multiple channels.

Fig. 13 shows a block diagram of an Ethernet to UTOPIA/VDSL design using the off-the-shelf-components.

Fig. 14 shows another block diagram of an Ethernet to UTOPIA/VDSL design using the off-the-shelf-components.

Fig. 15 shows another embodiment of the present invention extending the **Ethernet bus to USB interface.**

### Detailed Description of the Invention

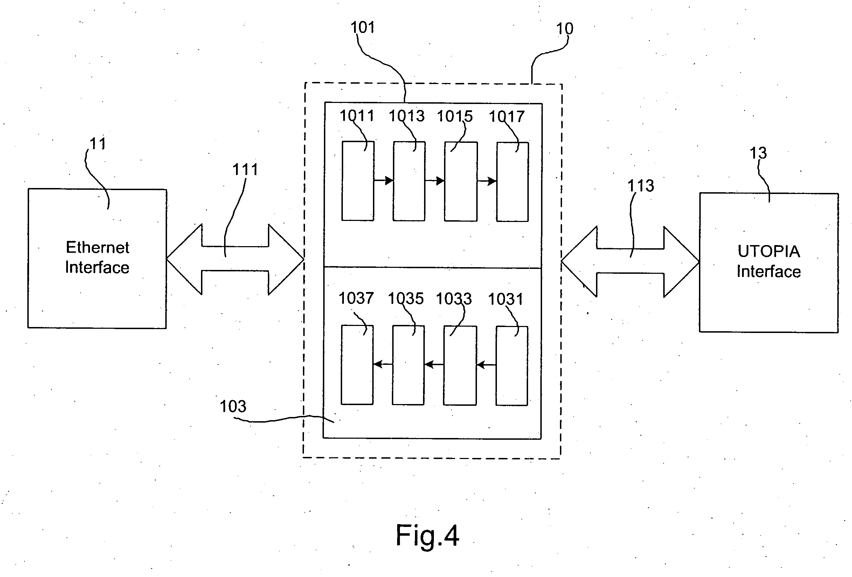

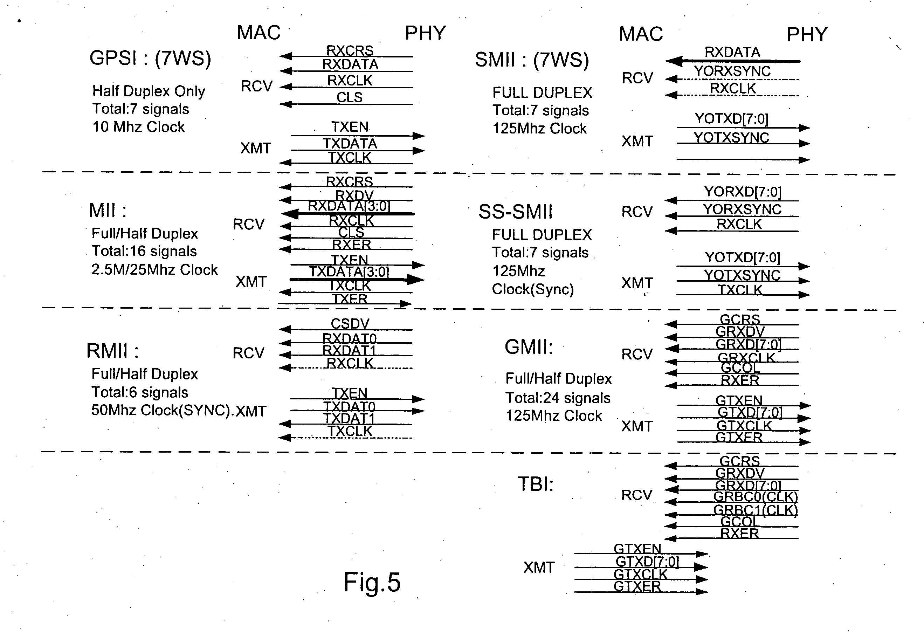

The present invention relates to a converter/bridge between Ethernet interface bus and UTOPIA interface bus. Fig. 4 shows in simplified block diagram form an embodiment of the present invention. The converter/bridge 10 respectively couples to Ethernet bus interface 11 and UTOPIA bus interface 13 via an Ethernet bus 111 and a UTOPIA bus 113. The converter/bridge 10 includes a first conversion device 101 and a second conversion device 103. The first conversion device 101 receives and converts Ethernet data packet over the Ethernet bus 111 into 53-byte ATM cells over UTOPIA bus 113. The second conversion device 103 receives and converts 53-byte ATM cells over the UTOPIA bus 113 into Ethernet data packet over Ethernet bus 111. In addition, the Ethernet bus interface is selected form GPSI, MII, RMII, SMII, GMII, SS-SMII, TBI and other Ethernet interfaces. The Ethernet MAC_PHY bus interface standard and signals is shown in Fig. 5. UTOPIA bus interface is selected from UTOPIA level 1, Level 2, Level 3, and level 4 bus.

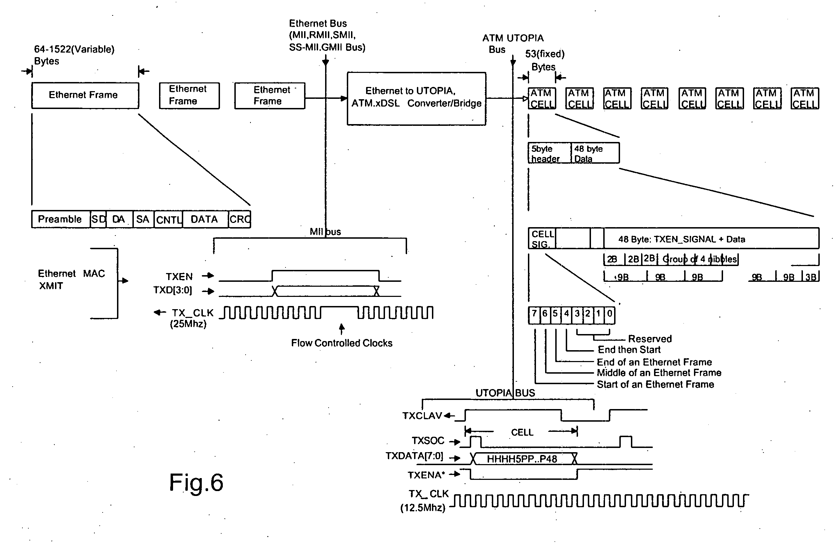

Furthermore, the first conversion device101 includes a conversion unit 1011 and an ATM Cell Buffer unit 1013, a transmitting unit 1015 and a TX_CLK flow controlled clock unit 1017. The conversion unit 1011 is used for converting the Ethernet data packets into 4-nibble sub-cell data field, each 4-nibble sub-cell data field including a 3-nibble data field and an associated signal nibble. The signal bit is the TXEN (transmit Enable signal bit) in the MII/Ethernet Bus. And the Data field nibble is the TXDATA [3:0] (transmit Data bit 3-0.) The associated signal nibble indicates the presence of the associated data field in the Ethernet Bus. The overview of Ethernet Frames to UTOPIA (ATM) cell transmission path is shown in Fig. 6 which depicts how the Ethernet frames converting to ATM Cells. The ATM Cell Buffer unit 1013 is used for combining a group of twenty-four multiple 4-nibble sub-cell data field and inserting the Cell Signal byte in the header field of the ATM Cell into a 53-byte ATM cell. The header further has an unused data field for out band management conveying the status and controlling local and remote node. The transmitting unit 1015 is used for transmitting the 53-byte ATM cell in ATM cell format.

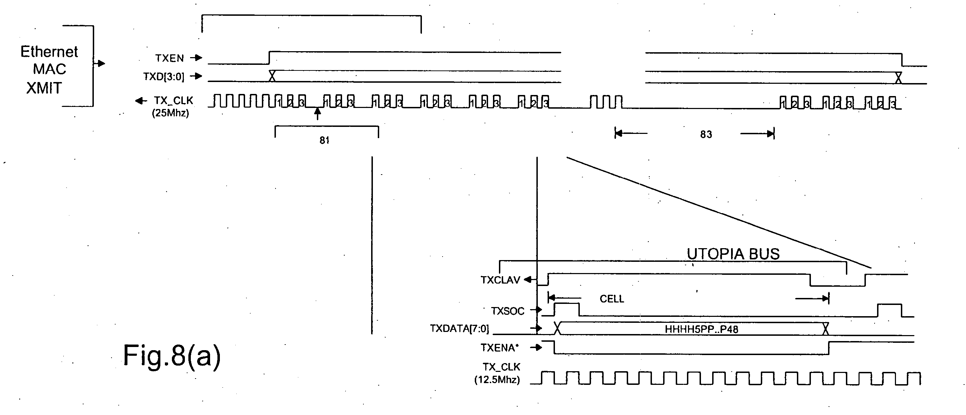

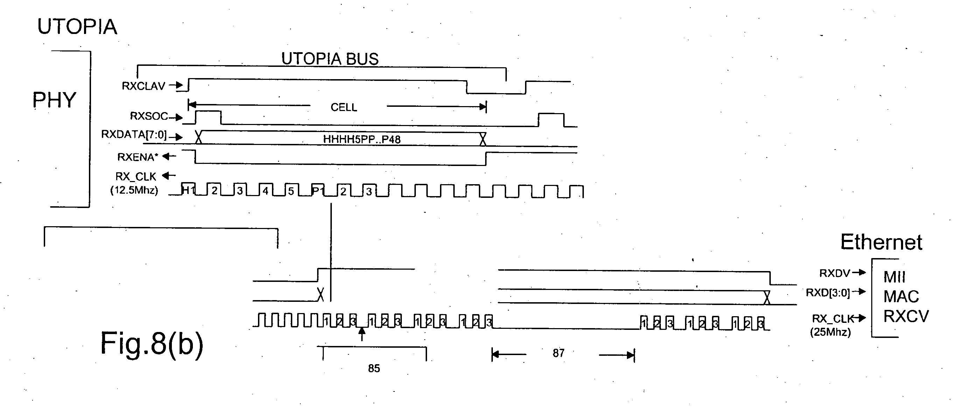

The flow control Clock 1017 is to slow down the Ethernet transmission speed due to slower speed in the xDSL transmission than the Ethernet/MII bus speed. The Ethernet MII TX_CLK clock rate shall be running at 25Mhz speed. With 4-bit (Nibble wide) TXDATA [3:0]] data bus, the nominal speed of interface 111 is running at 100Mbps. The UTOPIA bus shall be running at 12.5Mhz clock rate. With 8-bit wide of the UTOPIA bus the speed of interface 113 is also running at 100Mbps. This clock rate scheme result in simply the buffer management. Further more of the flow control that when 1011 inserting the Signal nibble, this will add 25% of the signaling overhead. So the TX_CLK shall pause for one 25Mhz Clock cycle 81 after receiving 3 nibbles of Ethernet data field as shown in Fig. 8(a). This results in that both Ethernet MII bus and UTOPIA bus are running at 100Mbps with 25% signal nibble overhead. The actual data transmission is 75Mbps. Further more for the flow control scheme that when UTOPIA stop sending the TXCLAV (Transmit Cell Available) to the interface 113, this means that previous xDSL/ATM cells have not been transmitted completed. This will result in buffer full situation of 1013. When this happened, the flow control Clock 1017 shall further pause the TX_CLK (25Mhz clocks) 83 until the ATM Cell Buffer unit 1013 has at least one cell buffer to be transmitted to interface 113. Since the header field of the ATM cell has limited utilization by the ATM forum so only the first byte of the header been used as the Cell Signal byte indicating the Cell data has the Ethernet data field as depicted in the Figure 6.

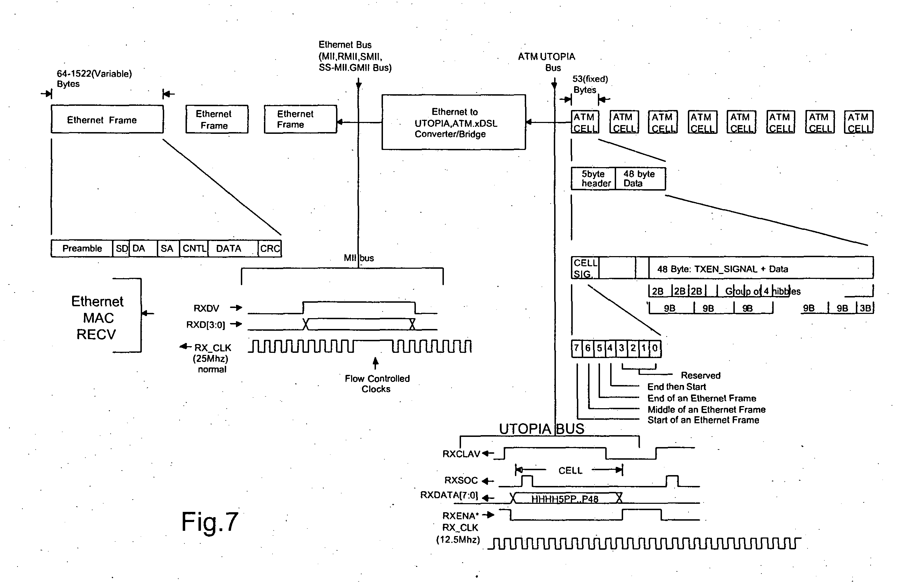

The second conversion device 103 also includes a receiving unit 1031, a conversion unit 1033, a transmitting unit 1035, and a RX_CLK flow controlled clock unit 1037. The receiving unit 1031 detects the Cell Signal Byte in the first byte of the ATM Cell Header field and send only the ATM Cell data (48 bytes) to conversion unit 1033 Cell buffer. The Cell Data is composed of twenty-four multiple 4-nibble sub-cell data field, each 4-nibble sub-cell data field including a 3-nibble data field and an associated signal nibble ahead. The conversion unit 1033 converts the Signal Bit to the RXDV (Receive Data Available) signal of Ethernet MII bus and convert the associated data nibbles in the following data byte to the RXDATA [3:0] (Receive Data bit 3-0) of the Ethernet MII bus. The transmitting unit 1035 is used for transmitting the Ethernet data packet in Ethernet packet format. An overview of UTOPIA (ATM) cell reception path is shown in Fig. 7 which depict how the ATM Cells are converted to the Ethernet frames.

The flow control Clock 1037 is to slow down the Ethernet receiving speed due to slower speed in the xDSL reception. The Ethernet MII RX_CLK clock rate shall be running at 25Mhz speed. With 4-bit (Nibble wide) RXDATA [3:0] data bus, the nominal speed of interface 311 is running at 100Mbps. The UTOPIA bus shall be running at 12.5Mhz clock rate. With 8-bit wide of the UTOPIA bus the speed of interface 113 is also running at 100Mbps. This clock rate scheme results in simplify the buffer management. Further more for the flow control that when conversion unit 1033 striping the Signal nibble, this will cut 25% of the Ethernet Bus Receiving speed. So the RX_CLK shall pause for one 25Mhz Clock cycle 85 after receiving 3 nibbles of Ethernet data field as shown in Fig. 8(b). This results in that Ethernet MII bus is running at 75Mbps speed while the UTOPIA bus is running at 100Mbps. Further more for the flow control scheme that when UTOPIA stops sending the RXCLAV (Receive Cell Available) to the 113, this means that no complete Ethernet Frame which composed of ATM cells have been received yet. This will result-in buffer empty situation of 1033. When this happended the 1037 shall further pause the RX_CLK (25Mhz clocks) until the 1033 has the last cell of the complete Ethernet Frame to be transmitted to interface 113.

In another embodiment of the present invention further provides an embodiment, including a first conversion device and a second conversion device. The first conversion device has included a conversion unit 1011, an ATM Cell Buffer unit 1013, a transmitting unit 1015 ,and TX_CLK flow controlled clock unit 1017. Similarly, the conversion unit 1011 is used for converting the Ethernet data packets into 9-byte sub-cell data field, each 9-byte sub-cell data field including an 8-byte data field and an associated signal byte. The associated signal byte indicates the presence of the associated data field in Ethernet Bus as shown in Fig. 6. The ATM Cell Buffer unit 1013 is used for combining a group of five multiple 9-byte packets with a 5-byte of header and 3 reserved bytes into a first 53-byte ATM cell. The reserved bytes are used for out band management conveying the status and controlling local and remote node. The transmitting unit 1015 is used for transmitting the 53-byte ATM cell in ATM cell format.

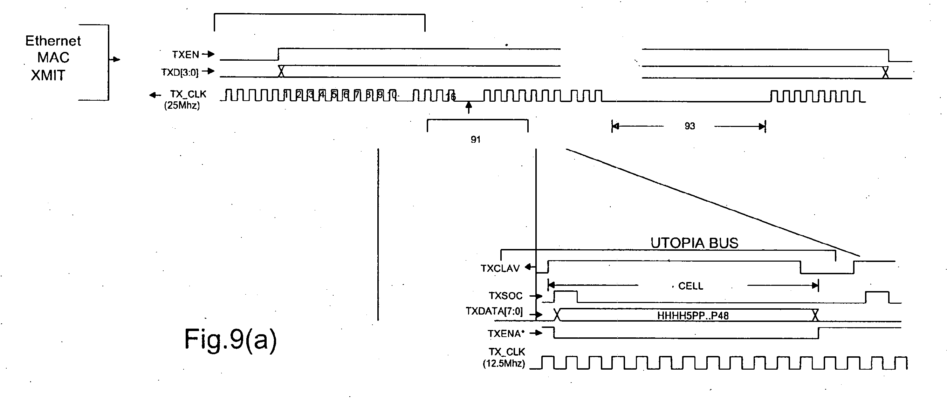

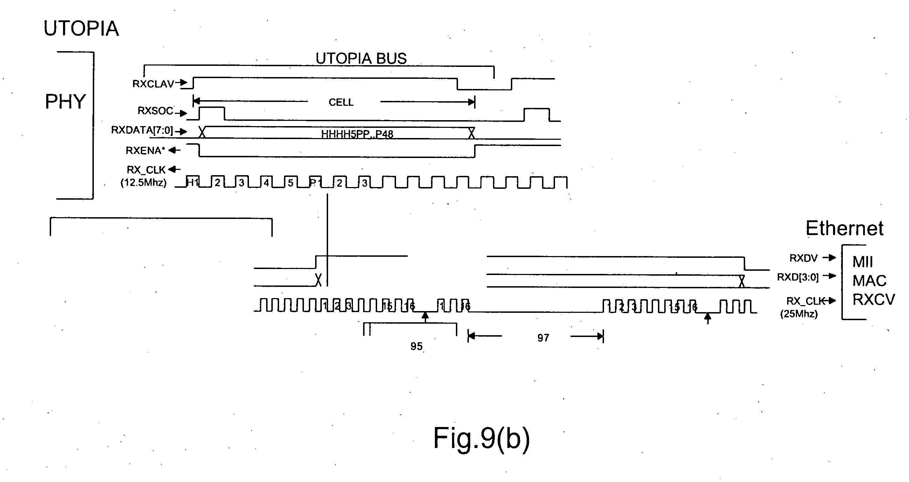

The flow control Clock 1017 is to slow down the Ethernet transmission speed due to slower speed in the xDSL transmission. The Ethernet MII TX_CLK clock rate shall be running at 25Mhz speed. With 4-bit (Nibble wide) XDATA [3:0] data bus, the nominal speed of interface 111 is running at 100Mbps. The UTOPIA bus shall be running at 12.5Mhz clock rate. With 8-bit wide of the UTOPIA bus the speed of interface 113 is also running at 100Mbps. This clock rate scheme result in simply the buffer management. Further more of the flow control that when 1011 inserting the Signal nibble, this will add 12.5% of the signaling overhead. So the TX_CLK shall pause for two 25Mhz Clock cycles 91 after receiving 16 nibbles of Ethernet data field as shown in Fig. 9(a). This results in that both Ethernet MII bus and UTOPIA bus are running at 100Mbps with 12.5% signal nibble overhead. The actual data transmission is 87.5Mbps. Further more for the flow control scheme that when UTOPIA stop sending the TXCLAV (Transmit Cell Available) to the interface 113, this means that previous xDSL/ATM cells have not been transmitted completed. This will result in buffer full situation of 1013. When this happened, the flow control Clock 1017 shall further pause the TX_CLK (25Mhz clocks) 93 until the ATM Cell Buffer unit 1013 has at least one cell buffer to be transmitted to interface 113. Since the header field of the ATM cell has limited utilization by the ATM forum so only the first byte of the header been used as the Cell Signal byte indicating the Cell data has the Ethernet data field as depicted in the Figure 6.

The second conversion unit 103 also includes a receiving unit 1031, a conversion unit 1033, a transmitting unit 1035 and RX_CLK flow controlled clock unit 1037. The receiving unit 1031 of second conversion unit is used for detecting the Cell Signal Byte in the first byte to the ATM Cell Header field and sending only the ATM Cell data to ATM Cell buffer. The Cell Data is composed of five multiple 9-byte data fields and a 5-byte of header and 3 reserved bytes. Each 9-byte data field including an 8-byte data field and an associated signal byte. The conversion unit 1033 is used for converting ATM cell data into Ethernet data packet. The transmitting unit 1035 is used for transmitting the Ethernet data packet in Ethernet packet format.

The flow control Clock 1037 of the embodiment is to slow down the Ethernet receiving speed due to slower speed in the xDSL reception. The Ethernet MII RX_CLK clock rate shall be running at 25Mhz speed. With 4-bit (Nibble wide) RXDATA [3:0]] data bus, the nominal speed of interface 311 is running at 100Mbps. The UTOPIA bus shall be running at 12.5Mhz clock rate. With 8-bit wide of the UTOPIA bus the speed of interface 113 is also running at 100Mbps. This clock rate scheme results in simplify the buffer management. Further more of the flow control that when conversion unit 1033 striping the Signal nibble, this will cut 12.5% of the Ethernet Bus Receiving speed. So the RX_CLK shall pause for two 25Mhz Clock cycles 95 after receiving 16 nibbles of Ethernet data field as shown in Fig. 9(b). This results in that Ethernet MII bus is running at 87.5Mbps speed while the UTOPIA bus is running at 100Mbps. Further more for the flow control scheme that when UTOPIA stop sending the RXCLAV (Receive Cell Available) to the 113, this means that no complete Ethernet Frame which composed of ATM cells have been received yet.. This will resultin buffer empty situation of 1033. When this happened, the 1037 shall further pause the RX_CLK (25Mhz clocks) until the 1033 has at least one cell buffer 97 to be transmitted to interface 113.

For improving the performance of the converter/bridge between Ethernet interface bus and UTOPIA interface bus, the present invention may trim the preamble and the start frame delimiter of an Ethernet packet when receiving the Ethernet packet from the Ethernet MAC. The present invention only transmits the destination address, source address, type field, payload, and the CRC of the Ethernet packet over UTOPIA bus. Additionally, when receiving a packet from UTOPIA, the present invention adds the preamble and the start frame delimiter in front of the receiving frame and transmits to Ethernet bus. This will improve the performance by 12.5% (8/64) assuming the Ethernet frame is the shortest size of 64 bytes.

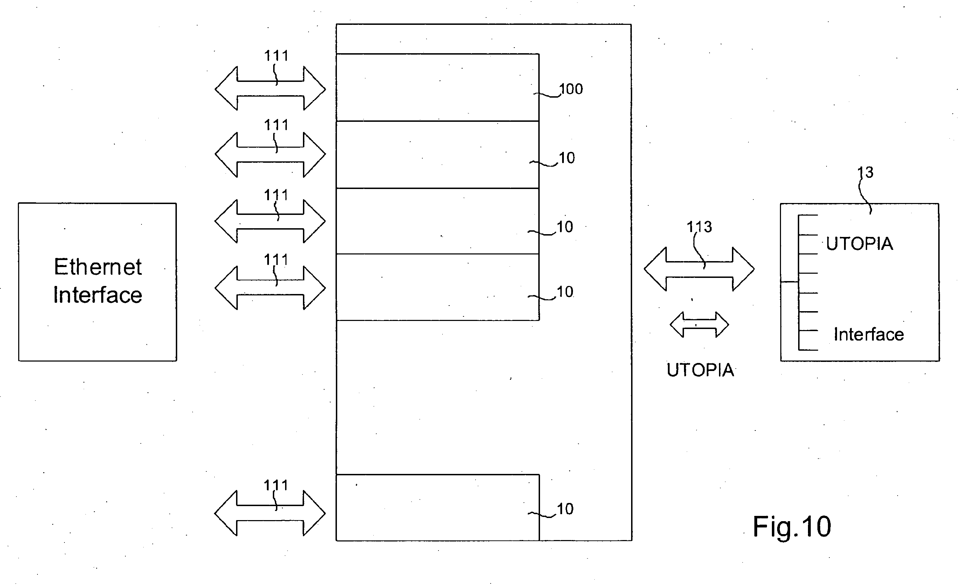

Fig. 10 shows another embodiment of the present invention coupled UTOPIA bus interface via multiple first buses 111. Matching the address of UTOPIA level 2, level 3, and level 4 interfaces 113, the present invention supporting multiple cha nnels up to 32 channels further including an address decision unit on UTOPIA bus 100 for distinguishing a proper first bus to transmit Ethernet data packets.

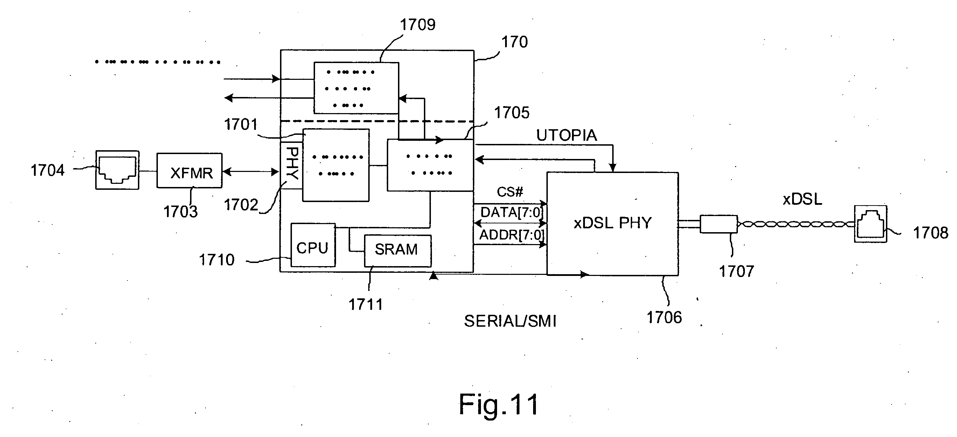

Fig. 11 shows an embodiment of the present invention which couples to Ethernet bus interface and UTOPIA bus interface in single channel. In the embodiment 170, the converter/bridge is made up in a single chip. The embodiment of the present invention includes an Ethernet bridge 1701 and an Ethernet PHY device 1702. The Ethernet bridge 1701 works as the 2-port Ethernet switch with Ethernet MAC built in to interface the Ethernet subnet specially when flow control situation occurred due to slower speed of xDSL transmission . The Ethernet PHY device 1702 provides the physical layer interface to one standard Ethernet node connected over wiring appropriate for standard Ethernet. An Ethernet transformer device 1703 is used to provide the transformer circuits and couple signals between a connector 1704 and the PHY device 1702.

The embodiment 170 also includes a UTOPIA master 1705, a xDSL PHY 1706 and a UTOPIA slave buffer 1709. The UTOPIA master 1705 is responsible to initiate and control data transfers from and to the UTOPIA slave buffer 1709, xSDL PHY 1706 and the Ethernet bridge 1701. The xDSL PHY device 1706 provides the physical layer interface to one standard xSDL node connected over wiring appropriate for standard xDSL.

The UTOPIA buffer 1709 is responsible to receive data from original UTOPIA. The UTOPIA slave buffer can ride on existing ATM transmission. The present invention allows data stream transmitting between UTOPIA interfaces by the UTOPIA buffer 1709 coupled to original ATM UTOPIA bus. The UTOPIA master 1705 handles the original ATM UTOPIA bus and the converted UTOPIA bus. The UTOPIA master 1705 transmits original ATM cells and converts Ethernet packets to the UTOPIA bus. A xDSL transformer device 1707 is used to provide the transformer circuits and couple signals between a connector 1708 and the PHY device 1706. In addition, the embodiment also includes a Central Processor Unit 1710 and SRAM 1711 for maintaining the status and the commands of the UTOPIA master 1705.

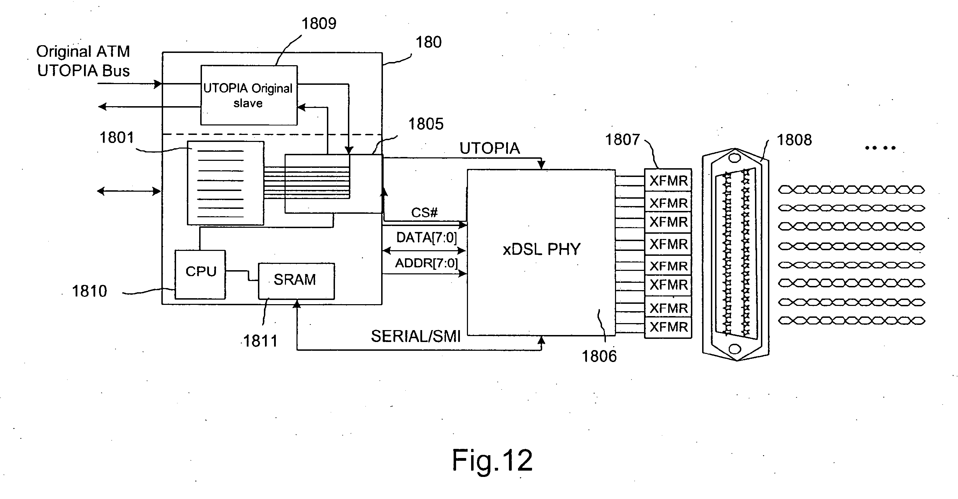

Fig. 12 shows an embodiment of the present invention which couples to Ethernet bus interface and UTOPIA bus interface in multiple channels. For example, there are 8 channels in the embodiment. In the embodiment 180, the converter/bridge is made up of 8 channels in a single chip. The embodiment of the present invention includes an Ethernet bridge of 8 channels 1801. The embodiment 180 also includes a UTOPIA master 1805, a xDSL PHY 1806 that multiplexed 8 channels of ATM cells buffer. The UTOPIA master 1805 is responsible to initiate and control data transfers from and to the UTOPIA slave buffer 1809, xDSLPHY 1806 and the Ethernet bridge 1801. The xDSL PHY device 1806 provides the physical layer interface to one standard xSDL nodes connected over wiring appropriate for standard xDSL

The UTOPIA slave buffer 1809 is responsible to receive data from original ATM UTOPIA. The UTOPIA slave buffer 1809 can ride on existing ATM transmission. The present invention allows data stream transmitting between UTOPIA interfaces by the UTOPIA buffer 1809 coupled to original ATM UTOPIA bus. The UTOPIA master 1805 handles the original UTOPIA bus and the converter UTOPIA bus. The UTOPIA master 1805. transmits original ATM cells and converts Ethernet packets to the UTOPIA bus. xDSL transformer device 1807 is used to provide the transformer circuits and couple signals between a connector 1808 and the PHY device 1806. In addition, the embodiment also includes a processor 1810 and SRAM 1811 for maintaining the status and the commands of the UTOPIA master 1805. No Ethernet packet buffer is needed because of using the full duplex mode.

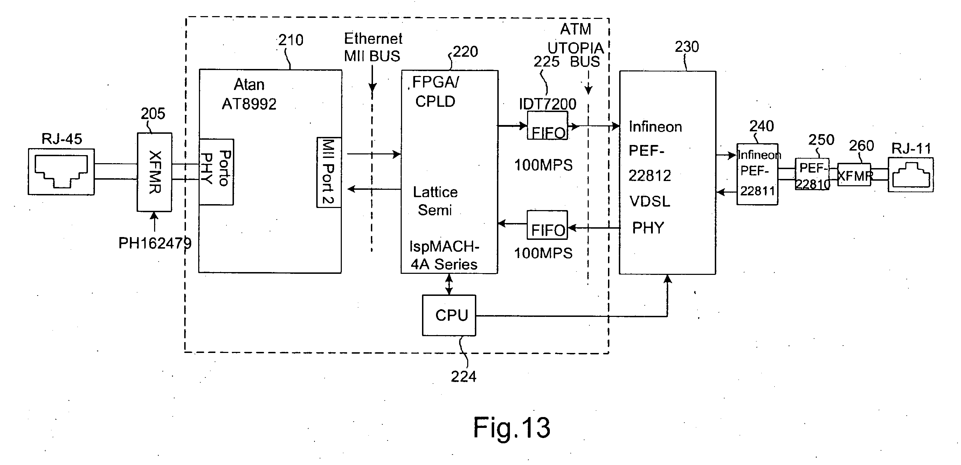

Fig. 13 shows a block diagram of an Ethernet to UTOPIA/VDSL design using the off-the-shelf-components converting Ethernet data packets into sub-cell data field. The Ethernet to UTOPIA/VDSL of this design is provided to make an SOC (System On Chip)_ which integrates FPGA 220, MAC 210, and CPU 224. The transformer for Ethernet 205 is provided by PH162479 from YCL. The 2- port Ethernet switch /MAC 210 is provided by ATAN8992 from ATAN. The MIIto UTOPIA converter 220 is provided by Lattice Semiconductor ispMACH4 series. Two FIFO 225 is provided by IDT 7200. The VDSL data pump 230 is provided by Infmeon VDSL PEF-22812. The VDSL AFE (analog front end) 240 is provided Infineon VDSL PEF-22811. The VDSL line driver 250 is provided by Infmeon VDSL PEF-22810. The transformer for VDSL from APC 260 is provided by APC-77112/77110.

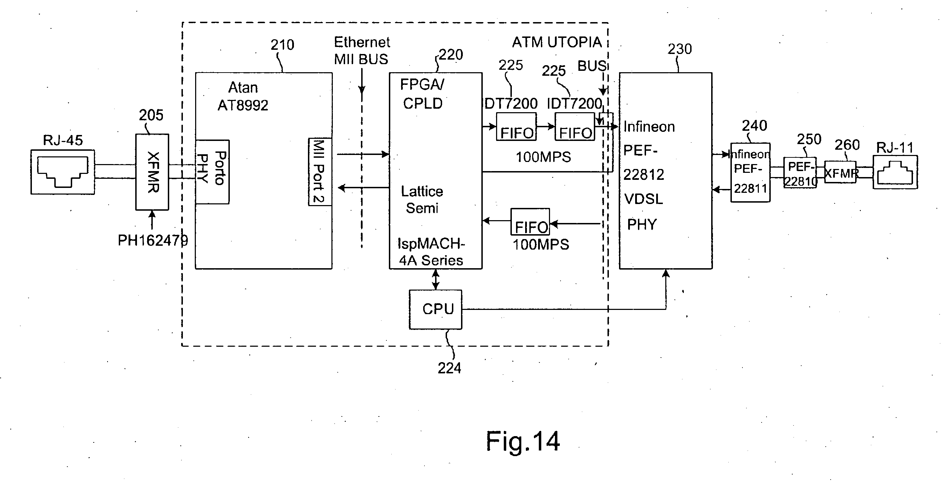

Fig. 14 shows another block diagram of an Ethernet to UTOPIA/VDSL design using the off-the-shelf-component. The difference between the Fig 13 and Fig. 14 is the Ethernet to UTOPIA/VDSL design converting Ethernet data packets into 9-byte sub-cell data field shown in Fig. 14 which uses three FIFOs to process more data transmission.

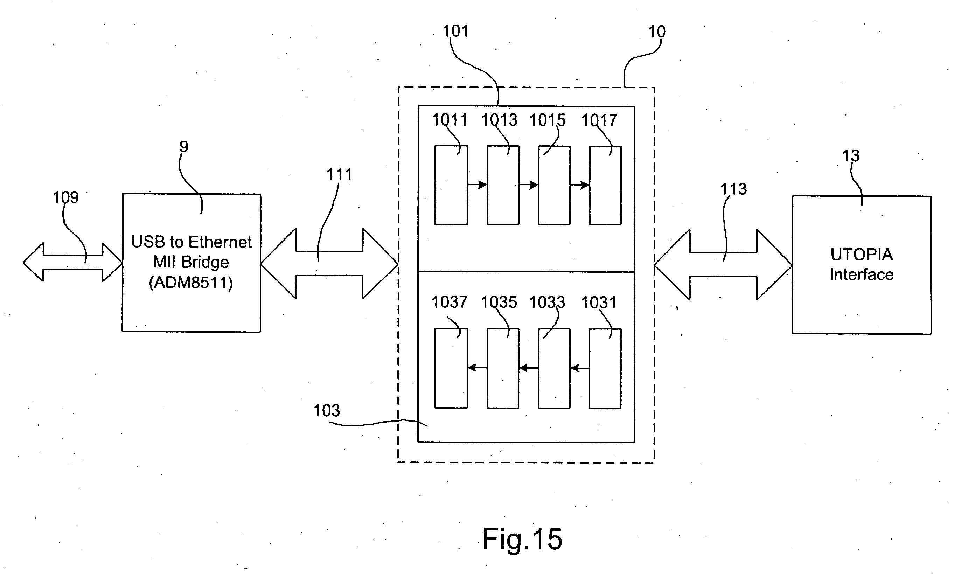

Fig. 15 shows another embodiment of the present invention. The embodiment further includes a USB to Ethernet bridge 9 connecting Ethernet MII bus to USB 1.1/2.0 109. Therefore, the present invention can be used as a converter/bridge between USB and UTOPIA The USB to Ethernet MII bridge 9 can be found from off-the-shelf device such as ADM 8511.

It should be appreciated by one skilled in the art that the above description is of exemplary embodiments only and is not intended to limit the scope, applicability, or configuration of the invention in any way. Rather, the above description merely provides convenient illustrations for implementing various embodiments of the invention. For example, various changes may be made in the design and arrangement of the elements described in the exemplary embodiments herein without departing from the scope of the invention as set forth in the appended claims.

The features disclosed in the foregoing description, in the claims and/or the accompanying drawings may both, separately and in any canbination thereof, be material for realising the invention in diverse forms therof.

## Claims

1. A single and multiple channels converter/bridge respectively coupled to an Ethernet bus interface and an ATM bus interface via a first bus and a second bus, comprising:
a first conversion device for receiving and converting Ethernet data packets over the first bus into 53-byte ATM cells over the second bus;
a second conversion device for receiving and converting 53-byte ATM cells over the second bus into Ethernet data packets over the first bus.

2. The converter/bridge of claim 1 wherein the Ethernet bus interface is selected from the group consisting of GPSI, MII, RMII SMII, GMII, SS-SMII, TBI and other Ethernet interfaces

3. The converter/bridge of claim 1 or 2, wherein the second bus is selected from the group consisting of UTOPIA level 1, level 2, level 3, and level 4 buses.

4. The converter/bridge of one of the preceding claims further coupled Ethernet bus interface via a plurality of first buses, and further comprising an address decision unit on second bus for distinguishing a first bus to transmit and/or receive Ethernet data packets, said second bus being selected from the group consisting of UTOPIA level 2, level 3 and level 4.

5. The converter/bridge of one of the preceding claims wherein the first conversion device further comprising:
a first conversion unit for converting first Ethernet data packets into first 4-nibble data fields, each first 4-nibble data field including a first 3-nibble data field and a first associated signal nibble; an ATM Cell Buffer unit for combining a first group of twenty-four multiple first 4- nibble data field with a first 5-byte of header into a first 53-byte ATM cell, said header having an unused data field for out band management conveying the status and controlling a local and remote node; and a first transmitting unit for transmitting the first 53-byte ATM cell in ATM cell, and
wherein the second conversion device further comprising:
a receiving unit for receiving a plurality of ATM Cell data, each ATM Cell including a group of twenty-four multiple 4-nibble data fields, each data field including a 3-nibble data field and an associated signal nibble, combined with a second 5-byte of header;
a second conversion unit for converting said ATM cell data into a second Ethernet data packet; and
a second transmitting unit for transmitting the second Ethernet data packet in Ethernet packet format.

6. The converter/bridge of claim 5, wherein said first conversion unit includes a first flow control clock unit for slowing down an Ethernet transmitting speed, and said second conversion unit includes a second flow control clock unit for slowing down an Ethernet receiving speed.

7. The converter/bridge of one of the preceding claims, wherein the first conversion device further comprising:
a first conversion unit for converting Ethernet data packets into first 9-byte data fields, each first 9-byte data field including a first 8-byte data field and a first associated signal byte;
an ATM Cell Buffer unit for combining a group of five multiple first 9-byte data fields with a first 5-byte of header and 3 reserved bytes into a first 53-byte ATM cell, said 3 reserved bytes being used for out band management conveying the status and controlling a local and a remote nodes, and
a first transmitting unit for transmitting the first 53-byte ATM cell in ATM cell format, and wherein the second conversion device further comprising a second receiving unit for receiving a plurality of ATM Cell data, each ATM Cell including second a group of five multiple second 9-byte data fields, each second 9-byte data fields including a second 8-byte data field and a second associated signal byte, combined with a second 5-byte of header and 3 reserved bytes, and
a second conversion unit for converting said ATM Cell data into a second Ethernet data packet; and
a second transmitting unit for transmitting the second Ethernet data packet in Ethernet packet format.

8. The converter/bridge of claim 7, wherein said first conversion unit includes a first flow control clock unit for slowing down an Ethernet transmitting speed, and said second control clock unit includes a second flow control clock unit for slowing down an Ethernet receiving speed.

9. The converter/bridge of one of the preceding claims, each of said Ethernet data packets including a preamble, a start delimiter, a destination address, a source address, a type field, a payload, and a error-checking code, said first conversion device further trimming said preamble and said delimiter of said Ethernet data packet and transmitting said destination address, said source address, said type field, said payload, and said error-checking code to said UTOPIA bus interface, said second conversion device further adding a preamble and a start delimiter in front of a data packet before transmitting to said Ethernet bus interface.

10. The converter/bridge of one of the preceding claims, further comprising an additional UTOPIA Slave buffer to interface the existing original UTOPIA bus for coupled to said UTOPIA bus interface and a second UTOPIA bus interface via a second bus and a third bus.

11. The converter/bridge of one of the preceding claims, further comprising a USB to Ethernet bridge coupled to said first bus and a USB interface.

12. A method for receiving and converting Ethernet packets over a first bus into 53-byte ATM cells over a second bus, comprising:
receiving and converting Ethernet data packets into 4-nibble data fields, each 4-nibble data field having a 3-nibble data field and an associated signal nibble;
combining a group of twenty-four multiple 4-nibble fields with the 5-byte of header into a 53-byte ATM cell; and
transmitting the group of twenty-four multiple 4-nibble fields with the 5-byte of header in ATM cell format.

13. A method for receiving and converting Ethernet Packets over a first bus into 53-byte ATM cells over a second bus, comprising:
receiving and converting Ethernet data packets into 9-byte data fields, each 9-byte data field having an 8-byte data field and an associated signal byte;
combining a group of five multiple 9-byte data fields with the 5-byte of header and 3 reserved byte into a 53-byte ATM cell; and
transmitting the group of five 9-byte data fields with the 5-byte of header and 3 reserved bytes in ATM cell format.

14. A method for receiving and converting 53-byte ATM cells over a second bus into Ethernet packets over a first bus, comprising:
receiving a group of twenty-four multiple 4-nibble packets, each 4-nibble packet including a 3-nibble data packet and an associated signal nibble, combined with a 5-byte of header;
converting the group of twenty-four multiple 4-nibble packets, each 4-nibble packet including the 3-nibble data and the associated signal nibble;
converting each 4-nibble packet into an Ethernet data packet; and transmitting the Ethernet data packet in Ethernet packet format.

15. A method for receiving and converting 53-byte ATM cells over a second bus into Ethernet packets over a first bus, comprising:
receiving a group of five multiple 9-byte packets, each 9-byte packet including an 8-byte data packet and an associated signal byte, combined with a 5-byte of header and 3 reserved bytes;
converting the group of five multiple 9-byte packets and the 5-byte of header into five 9-byte packets;
converting each 9-byte packet into an Ethernet data packet; and
transmitting the Ethernet data packet in Ethernet packet format.
